# EUROPEAN PATENT APPLICATION

(11) **EP 4 826 495 A1**
(43) Date of publication of application: **21.10.2026**
(21) Application number: 25305571.9
(22) Date of filing: 18.04.2025
(51) Int. Cl.: G06F 3/01, A63F 13/28, A63F 13/285, A63F 13/57, G06F 3/038, G06F 3/16, G06F 9/451

(54) **METHOD AND DEVICE FOR HAPTIC DEVICE MAPPING THROUGH HIERARCHICAL SEMANTIC STRUCTURES FOR SPATIAL HAPTIC LISTENERS**

(71) Applicant: InterDigital CE Patent Holdings, SAS, 75017 Paris (FR); INRIA - Institut National de Recherche en Informatique et en Automatique, 78150 Le Chesnay (FR)
(72) Inventor: GALVANE, Quentin, 35235 THORIGNE-FOUILLARD (FR); LECUYER, Gurvan, 35000 RENNES (FR); ROY, Tom, 35510 CESSON-SEVIGNE (FR); GLEMAREC, Yann, 35000 RENNES (FR)
(74) Representative: Interdigital

(57) **Abstract**

A system for the spatialization of haptic effects comprises a mapping process to associate haptic listeners of a virtual haptic device in the virtual environment to haptic actuators of a haptic rendering device in the real world. The mapping is based on a hierarchical data structure for the virtual haptic device comprising semantic, layout and ordering data of the haptic listeners and a similar hierarchical data structure for the haptic rendering device comprising semantic, layout and ordering data of the haptic actuators. The layout data defines a direction along which a set of haptic listeners or haptic actuators is arranged and may be selected among a set comprising left-to-right, right-to-left, top-to-bottom, bottom-to-top, front-to-back and back-to-front.

## Description

### TECHNICAL FIELD

At least one of the present embodiments generally relates to haptic content representation and more particularly to a method and device for haptic device mapping through hierarchical semantic structures for spatial haptic listeners.

### BACKGROUND

Haptics refers to sense of touch and includes two dimensions, tactile and kinesthetic. The first relates to tactile sensations such as friction, roughness, hardness, temperature and is felt through the mechanoreceptors of the skin (Merkel cell, Ruffini ending, Meissner corpuscle, Pacinian corpuscle). The second is linked to the sensation of force/torque, position, motion/velocity provided by the muscles, tendons and the mechanoreceptors in the joints.

Haptic can be experienced in movie theaters through 4DX movie. Haptic is an additional track played along with video and audio to augment movie experiences. Haptic is also commonly used in interactive experiences, such as video games or virtual reality (VR) experiences, to enhance the immersion feeling. Providing haptic feedback when interacting with virtual object provides a natural feeling that adds a new layer of realism in the experience.

For interactive experiences in virtual environments, the use of haptic is becoming more and more popular but the integration of this new media remains limited. Most of the videogames and VR experiences are created using game engines such as Unity, or Unreal Engine. Over the past years, those game engines have made tremendous progress on various aspects (image quality, sound, scene complexity...) but they only provide yet very basic support for haptic. For example, only the most common game controller is supported natively by the mainstream game engine, providing simple haptic capabilities limited to vibration in the hand.

Haptic is gaining growing popularity with the release of numerous mass market haptic devices. This broadening range of consumer haptic devices comes with the need for better integration of haptic capabilities in game engine to better support the creation of immersive content. One of the big challenges that could leverage haptic capabilities is the support of haptic spatialization in applications.

### SUMMARY

A first aspect of at least one embodiment is directed to a method comprising obtaining data associated with a haptic virtual device comprising at least a graph of haptic listeners, where a haptic listener is associated with a haptic signal to be rendered and at least one of a semantic data, layout data and ordering data, obtaining data associated with a haptic rendering device comprising at least a graph of haptic actuators, where a haptic actuator is associated with at least one of a semantic data, layout data and ordering data, mapping haptic listeners of the haptic virtual device to corresponding haptic actuators of the haptic rendering device based on the graph of haptic listeners and the graph of haptic actuators, obtaining a haptic signal for a haptic listener; and providing the haptic signal to a haptic actuator corresponding to the haptic listener.

A second aspect of at least one embodiment is directed to an apparatus comprising a processor configured to obtain data associated with a haptic virtual device comprising at least a graph of haptic listeners, where a haptic listener is associated with a haptic signal to be rendered and at least one of a semantic data, layout data and ordering data, obtain data associated with a haptic rendering device comprising at least a graph of haptic actuators, where a haptic actuator is associated with at least one of a semantic data, layout data and ordering data, map haptic listeners of the haptic virtual device to corresponding haptic actuators of the haptic rendering device based on the graph of haptic listeners and the graph of haptic actuators, obtain a haptic signal for a haptic listener; and provide the haptic signal to a haptic actuator corresponding to the haptic listener.

A third aspect of at least one embodiment is directed to a computer program product stored on a non-transitory computer readable medium and comprising program code instructions executable by a processor, the computer program product implementing at least the steps of a method according to the first aspect.

### BRIEF DESCRIPTION OF THE DRAWINGS

The present disclosure may be better understood by consideration of the detailed description below in conjunction with the accompanying figures in which:
Figure 1 illustrates a block diagram of an example of system in which various aspects and embodiments are implemented.
Figure 2 illustrates principles of a propagation of a haptic signal within a system for haptic spatialization.
Figure 3 illustrates an example of data structure for a MPEG_spatial _haptic extension within a system for haptic spatialization.
Figure 4A illustrates an example of association of haptic listeners to a haptic virtual seat according to embodiments.
Figures 4B, 4C, 4D illustrate different examples of hierarchical structure defining a haptic virtual seat of figure 4A according to embodiments.
Figure 4E illustrates an example of hierarchical structure defining another example of haptic virtual device representing the hand of an avatar according to embodiments.
Figure 5 illustrates an example of hierarchical structure defining an example of haptic rendering device according to embodiments.
Figures 6A, 6B, 6C, 6D illustrate different examples of mapping between a hierarchical structure defining a haptic virtual seat and a hierarchical structure defining a haptic rendering device according to embodiments.
Figure 6B illustrates an example of mapping where the number of actuators is greater than the number of listeners.
Figure 6C illustrates an example of mapping where the number of actuators is smaller than the number of listeners.
Figure 6D illustrates an example of mapping where the haptic experience may have to be rendered on a completely different device, in other words, the haptic virtual device and the haptic rendering device have very different structures.
Figure 7 illustrates an example of method for mapping between a hierarchical structure defining a haptic virtual device and a hierarchical structure defining a haptic rendering device according to embodiments.
The Figure 8 shows an example of haptic chair with a structure that is different from the structure of the virtual haptic seats of figure4C or 4D.
Figure 9 illustrates an example of mapping performed based on semantic information according to embodiments.
Figure 10 illustrates the result of a reorganization for a haptic vest, initially organized in two layers, right to left at the upper layer and top to bottom at the second layer into a two layer structure, top to bottom at the first layer and right to left at the second layer.
Figure 11 illustrates an example of method for mapping between a hierarchical structure defining a haptic virtual device and a hierarchical structure defining a haptic rendering device comprising a reorganization process according to embodiments.
Figure 12 illustrates an example of data structure for a MPEG_spatial_haptic extension within a system for haptic spatialization according to embodiments.
Figure 13 illustrates an example of method for handling haptic listeners according to embodiments.

It should be understood that the drawings are for purposes of illustrating examples of various aspects, features and embodiments in accordance with the present disclosure and are not necessarily the only possible configurations.

### DETAILED DESCRIPTION

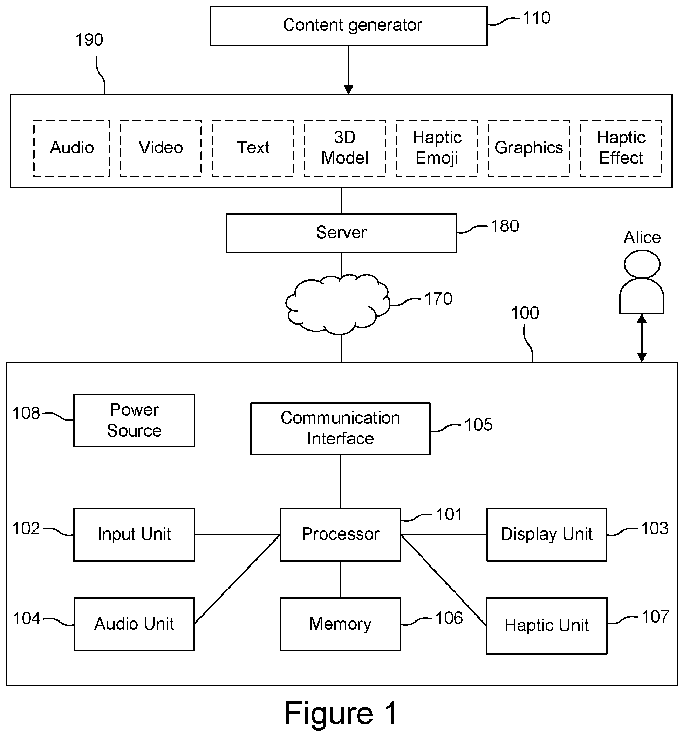

**Figure 1** illustrates a block diagram of an example of system in which various aspects and embodiments are implemented. In the depicted system, the user Alice uses the rendering device 100 to interact with a server 180 providing a content 190 through a communication network 170. This content 190 may take many different forms and may comprise various data and/or files such as audio data, video data, text, graphics required for its rendering. It may comprise haptic effects, and more particularly information related to the spatialization and propagation of haptic effects. The content 190 may be generated under control of a content generator 110 that may take different forms according to different context of usage. For example, when the content is a written document, the content generator may be implemented for example as an edition software running on a computer or server. When the content is a flow of interpersonal interactions (E.g., SMS) or social media interactions (E.g., WhatsApp, Twitter), the content generator may be implemented for example as an interaction manager software running on a computer.

The rendering device 100 is an apparatus that comprises a processor 101. The processor 101 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor may perform data processing such as haptic signal decoding, input/ output processing, and/or any other functionality that enables the device to operate in an immersive system.

The processor 101 may be coupled to an input unit 102 configured to convey user interactions. Multiple types of inputs and modalities can be used for that purpose. A physical keypad and a touch sensitive surface are typical examples of input units adapted to this usage although voice control could also be used. In addition, the input unit may also comprise a digital camera able to capture still pictures or video in two dimensions or a more complex sensor able to determine the depth information in addition to the picture or video and thus able to capture a complete 3D representation. The processor 101 may be coupled to a display unit 103 configured to output visual data to be displayed on a screen. Multiple types of displays can be used for that purpose such as a liquid crystal display (LCD) or organic light-emitting diode (OLED) display unit. The processor 101 may also be coupled to an audio unit 104 configured to render sound data to be converted into audio waves through an adapted transducer such as a loudspeaker for example. The processor 101 may be coupled to a communication interface 105 configured to exchange data with external devices. The communication preferably uses a wireless communication standard to provide mobility of the rendering device, such as cellular (e.g., LTE) communications, Wi-Fi communications, and the like. The processor 101 may access information from, and store data in the memory 106, that may comprise multiple types of memory including random access memory (RAM), read-only memory (ROM), a hard disk, a subscriber identity module (SIM) card, a memory stick, a secure digital (SD) memory card, any other type of memory storage device. In embodiments, the processor 101 may access information from, and store data in, memory that is not physically located on the device, such as on a server, a home computer, or another device.

The processor 101 is coupled to a haptic unit 107 configured to provide haptic feedback to the user (e.g.: vibrations), defined by the haptic effect described in the content 190. The haptic unit 107 may comprise a single haptic actuator or a plurality of haptic actuators located at a plurality of positions on the rendering device. Different haptic units may have a different number of actuators and/or the actuators may be positioned differently on the rendering device. A haptic unit may be integrated in the device or may be provided as a separate device. The haptic engine and rendering engine described below may be implemented by the processor 101, or by a separate processor (not depicted) or in separate devices.

In at least one embodiment, the processor 101 is configured to render a haptic signal according to embodiments described further below, in other words to apply a low-level signal to a haptic actuator to render a haptic effect. Such low-level signal may be represented using different forms, for example by metadata or parameters in the description file or by using a digital encoding of a sampled analog signal (e.g., PCM or LPCM).

The processor 101 may receive power from the power source 108 and may be configured to distribute and/or control the power to the other components in the device 100. The power source 108 may be any suitable device for powering the device. As examples, the power source may include one or more dry cell batteries (e.g., nickel-cadmium (NiCd), nickel-zinc (NiZn), nickel metal hydride (NiMH), lithium-ion (Li-ion), and the like), solar cells, fuel cells, and the like.

While the figure depicts the processor 101 and the other elements 102 to 108 as separate components, it will be appreciated that these elements may be integrated in an electronic package or chip. It will be appreciated that the rendering device 100 may include any subcombination of the elements described herein while remaining consistent with an embodiment. In addition, although the rendering device is presented as a standalone apparatus, it may also be implemented as a combination of different apparatuses. The processor 101 may further be coupled to other peripherals or units not depicted in figure 1 which may include one or more software and/or hardware modules that provide additional features, functionality and/or wired or wireless connectivity. For example, the peripherals may include sensors such as a universal serial bus (USB) port, a vibration device, a television transceiver, a hands-free headset, a Bluetooth^{®} module, a frequency modulated (FM) radio unit, a digital music player, a media player, a video game player module, an Internet browser, and the like.

Typical examples of a rendering device 100 are smartphones, tablets, computers, game/AR/VR controllers, headphones, or any other object with integrated haptic capabilities able to render a haptic effect.

Other examples of rendering devices 100 do not comprise any haptic capabilities but are in relation with one or more device able to render a haptic effect such as haptic gloves, haptic chairs, haptic props, motion platforms. In this case, the rendering device 100 may prepare data for rendering the haptic effect so that another device, such as a haptic prop, can perform the haptic rendering. Examples of such devices are television sets, head-mounted displays, gamepads, or laptops.

In at least one embodiment, the device does not include a display unit, nor does it include a haptic unit. In such embodiment, the device does not visually render the content 190 and does not render the associated haptic effects. However, the device may prepare data for display so that another device, such as a screen, can perform the display and may prepare data for rendering the haptic effect so that another device, such as a haptic prop, can perform the haptic rendering. Examples of such devices are computers, game consoles, optical media players, or set-top boxes.

In at least one embodiment, the content 190 and associated elements are directly hosted in memory 106 of the rendering device 100 allowing local rendering and interactions. In a variant of this embodiment, the device 100 also comprises the content generator 110 allowing a fully standalone operation, for example without needing any communication network 170 and server 180.

To address the topic of spatialization in immersive haptic experiences, a first system introduced the concepts of haptic sources, haptic listeners and haptic medium, along with a proposed implementation based on extensions to the glTF standard introduce above. In such system, a haptic medium is a virtual object with haptic properties. A haptic medium is associated with a node of the scene and its associated geometry. The same node may also be associated with haptic sources and haptic listeners. The main objective of a haptic medium is to modulate and transfer (propagate) haptic information based on its haptic properties (i.e. physical properties). A haptic medium may define a list of supported modalities, the physical properties of the material and propagation functions for different haptic modalities. A haptic source is an element of the virtual scene that emits a haptic signal. It is associated with a node of the scene and may be linked to the geometry associated with the node. The haptic data of a source is defined by a list of haptic medias. A haptic media may define haptic data for a vibration signal, a temperature, a movement or any other haptic modality. It is defined with a reference to a buffer associated with a media file containing the haptic data (such as a HJIF file, a HMPG file). The media may also specify information on how and when to play the haptic data. A haptic media may have different states. It could be activated or not. If the haptic effect is activated and playing, the haptic source emits the associated haptic signal that can then be propagated through haptic mediums. A haptic listener is an element of the scene that captures haptic information received from haptic sources. It is typically associated with a haptic device in the real world. It may be used to capture all the haptic data but it may also be restricted to specific haptic modalities.

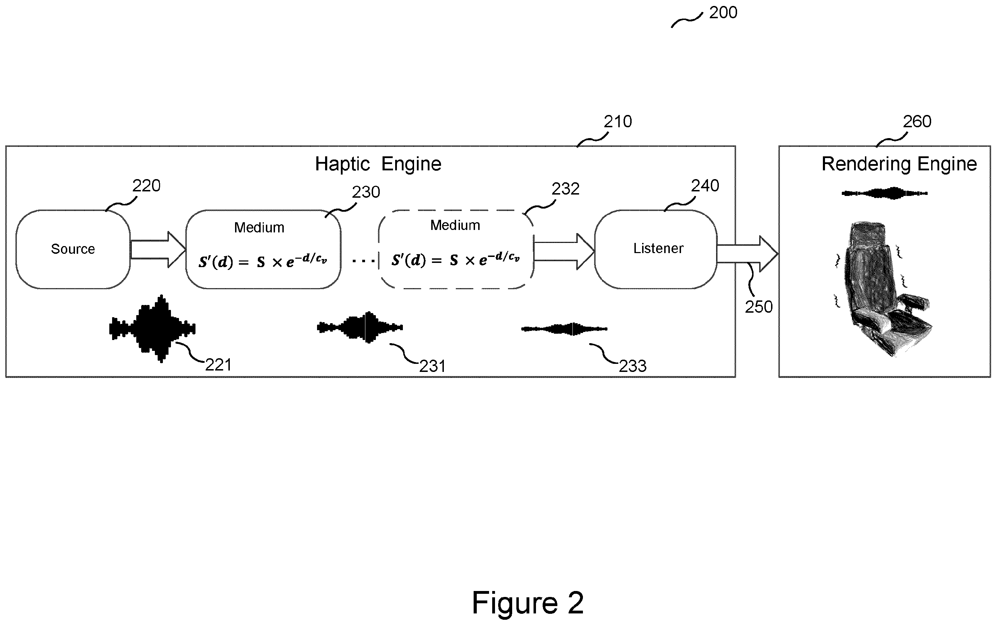

**Figure 2** illustrates principles of a propagation of a haptic signal within a system for haptic spatialization. In this example, the system 200 comprises a haptic engine 210 and a rendering engine 250. The haptic engine 210 is in charge of determining (E.g., computing) the haptic signal transmitted to each haptic listener in the scene. It uses the geometric information of the scene to establish the relation between haptic listeners and haptic sources. If a haptic listener is linked to a haptic source through one or more haptic mediums, the haptic engine uses the physical properties, and the propagation functions defined for each haptic medium to modulate the haptic signal emitted by the haptic sources. If there are several haptic mediums in between a source and listener, the haptic effect is propagated through each object starting from the source and the signal is therefore iteratively modulated. In the example of the figure, a single haptic source 220 provides a haptic signal 221. The haptic listener 240 is linked to the haptic source through the haptic medium 230 and optionally the haptic medium 232. Based on the haptic properties of the haptic medium 230, the haptic engine 210 determines the haptic signal 231 and then, optionally based on the haptic properties of the haptic medium 232, it determines the haptic signal 233 for the haptic listener 240. The haptic engine outputs the signal 250 captured by the listener to the rendering engine 260 that will play the haptic feedback on the devices. This example comprises a single haptic source so that the haptic signal 250 is identical to the signal 233. This is not the case in more complex situations using multiple haptic sources. When a haptic listener is associated with multiple haptic sources, the haptic engine may compute separately the modulated signals from the different haptic sources and either aggregate them (E.g., through a simple addition in the case of a same modality) or provide them separately to the rendering engine that will carry out the mixing or provide them to different haptic actuators. Indeed, multiple actuators rendering different modalities (E.g., vibration, temperature, pressure) may be needed to render the data received from the haptic engine. When there are several haptic listeners in the scene, the same operation has to be carried out independently for each haptic listener.

A haptic medium represents a virtual object with haptic properties. It is used to modulate and transfer haptic information based on its haptic properties (i.e. physical properties) that comprise parameters such as the list of haptic modalities that the object can transmit thermal conductivity or vibrotactile mediation for example. A non-exhaustive list is proposed in Table 2 below. Other properties may be added to the system to allow other types of modulation of the signal or address additional haptic modalities. In addition to these properties the haptic medium is also associated with a spatial localization that provides a position and orientation of the haptic medium within a haptic scene.

The haptic medium may also specify how to use these properties to modulate the input haptic signal based on the propagation distance, time or other variables. The propagation function may be specified in different manners. A first solution consists in using URNs, where each URN would uniquely identify a propagation function. For instance a URN urn:haptic-propagation:VibrationExponentialAttenuation could be defined with the following formula: $S ′ \left(d\right) = S \times {e}^{- \frac{d}{{c}_{v}}}$ (1) where *S* is the input signal, S' is the modulated signal, d is the propagation distance and *cᵥ* is the vibrotactile conductivity. The input signal can then be modulated by the renderer using this formula to output an attenuation function. This solution requires that the rendering engine has implemented the function specified in the URN. A second solution is to allow users to define their own custom functions directly into the object. This solution is more flexible and could be integrated using a simple string. This solution requires to precisely specify how to interpret the function. This could be done by relying on regular expressions to constrain the custom function and ensure it can be interpreted by the rendering engine. Specific keywords identifying the input, output, parameters and variables must be defined and the mathematical symbols and formulation of the function must be known and standard (based on ISO-80000-2:2019 for instance) so that any engine can interpret it. Equation (1) could be used directly as a custom function. The renderer would then have to interpret the function first to be able to render it.

Although the haptic mediums allow to establish a relation (E.g., a link) between the different elements (for example between one haptic source and one haptic listener, or between one haptic source and another haptic medium, or between one haptic medium and a haptic listener), this relation is not explicitly defined by syntax elements. It is the haptic engine that determines if a relation exists based on the geometry of the scene (i.e. position, orientation and shape of all the objects in the scene). For each listener in the scene the haptic engine identifies every source in direct relation or indirect relation (i.e. through one or multiple haptic mediums) with the listener and modulates the haptic signals based on the characteristics of the haptic mediums through which it was propagated. For example, in the situation where a user is resting his hands on a table and a falling object impacts the table in proximity of the right hand, the haptic engine will determine that the hands are linked to the object through the table. A vibration may be felt in both hands depending on the characteristics of the table. If the impact is strong, both hands are close and the table is metallic, the impact should be conveyed to both hands and a strong vibration may be provided to both hands as there is a link between the haptic source (the impact) and the haptic listeners (right hand and left hand). If the hands are far apart and the table is made of wood, both hands may receive a vibration, but the intensity of the vibrations received by the left hand will be weaker as it is further away from the source. If another character is standing in the same room but does not touch the table, there will be no link between the haptic source of the impact and this character since their respective geometric parameters do not share a contact point.

Specific haptic medium can be defined such as the "Air". It can be defined as a haptic medium that may receive and sent haptic information by emission into the space. The air can transmit haptic information according to a distance, an angle and other parameters.

A haptic source represents an element of the virtual scene that emits a haptic signal. A haptic source may be an element of the scene that only transmit its own haptic data, but it may also be at the same time a haptic medium that propagates haptic data coming from other sources. The haptic data of the source may be defined using a parametric representation or it may be stored using haptic medias. A haptic source may be placed in the virtual environment by a designer or created at runtime based on an interaction or an event. The haptic source may for instance be created following the collision of two haptic mediums. The haptic source is also associated with a spatial localization that provides a position and orientation of the haptic medium within a haptic scene.

A haptic source may define multiple haptic effects. For instance, the engine of a car may be associated with both vibration data and temperature data. This information could be stored in a single file or split into separate haptic medias. The haptic source handles and transmit the data of all its associated haptic effects.

A haptic effect may be composed of one or several signals (potentially with multiple channels). It may define haptic data for a vibration signal, a temperature, a movement or any other haptic modality. It may be defined with a parametric representation (e.g. similar to the JSON parametric representation proposed in the HJIF format for instance) or simply with a reference to a media file containing the haptic data (such as a HJIF file, a HMPG file, a WAV file, or any other haptic file). The effect may also specify information on how and when to play the haptic data. For instance, it may indicate a range (i.e. maximum distance), whether or not the effect should be repeated and the frequency at which it should be repeated, an intensity gain or the spatial density (i.e. how localized is the effect). It may also constrain the direction and shape of the emission (e.g. sphere, cone cylinder). A Haptic Effect may have different states. It could be activated or not. If the haptic effect is activated and playing, the haptic source emits the associated haptic signal that can then be propagated through haptic mediums.

A haptic listener represents a virtual sensor capturing haptic information received from haptic sources in the scene. It may be a haptic medium that can transmit haptic information, or it may be an element of the scene that only receives haptic data. It is typically associated with a haptic rendering device in the real world. It can be used to capture all the haptic data, but it may also be restricted to specific haptic modalities or limited to specific ranges (in terms of amplitude or frequency for instance). The haptic source is also associated with a spatial localization that provides a position and orientation of the haptic medium within a haptic scene.

The system for haptic spatialization presented herein may be implemented as an extension to the MPEG-I Scene description specification (ISO/IEC 23090-14 amd 2). The MPEG_Haptic extension as defined in the specification may be updated to support the embodiments for haptic spatialization. Indeed, the haptic extension currently only allows to attach haptic data indirectly to objects in the scene through the interactivity extension. Embodiments propose to define the key components required for spatialized haptics directly in the MPEG_haptic extension.

Table 1 describes the semantic of the MPEG_haptic extension at the node level.

**Table 1**

| **Name** | **Type** | **Default** | **Description** | **Required** |
|---|---|---|---|---|
| hapticMediums | Array<MPEG_Hap tics.hapticObject> | N/A | Provides a list of haptic mediums at the glTF file level to enable haptic support | Yes |
| hapticSources | Array<MPEG_Hap tics.hapticSource> | N/A | Provides a list of haptic sources at the glTF file level to enable haptic support | Yes |
| hapticListeners | Array<MPEG_Hap tics.hapticListener> | N/A | Provides a list of haptic listeners at the glTF file level to enable haptic support | Yes |

Each element of the hapticMediums array defines a medium with its properties and propagation functions. A medium defines the list of supported modalities as well as properties such as the thermal conductivity or vibrotactileMediation. Table 2 describes the semantic of haptic mediums.

**Table 2**

| **Name** | **Type** | **Default** | **Description** | **Required** |
|---|---|---|---|---|
| hapticModalities | array<Enumer ation> | N/A | List of haptic modalities that can be propagated through the medium. Possible values are described in Table 4. An empty list means that all modalities may be transmitted. | Yes |
| thermal Conductivity | Number | N/A | Thermal conductivity of the medium expressed in W/(m·K). | No |
| vibrotactileMediation | Number | N/A | Vibrotactile properties to be | No |
| propagationFunctions | array<Propaga tionFunction> | N/A | List of propagation functions to use for the different supported haptic modalities. | Yes |
| | | | If no propagation function is specified for a haptic modality, the haptic signal is transmitted without any modification (i.e. the propagation function is the identity) | |

The semantic defining a propagation function is detailed in Table 3. The propagation function may be specified in multiple ways. One solution consists in using URNs, where each URN would uniquely identify a propagation function. Another solution is to allow users to define their own custom functions directly into the object with a simple string.

**Table 3**

| **Name** | **Type** | **Default value** | **Description** | **Required** |
|---|---|---|---|---|
| hapticModality | Enumeration | N/A | Haptic modality for which the propagation function is defined. | Yes |
| | | | Possible values are described in Table 4. | |
| function | string | urn:haptic-propagation :identity | Function is a URN uniquely identifying what propagation function to use. For each URN, proper formulas shall be provided indicating what are the parameters (i.e. distance, time, ...) and how to use the haptic medium properties. | No |
| customFunction | string | "S'=S" | Custom function defining how a haptic signal is modulated based on the specified parameter. | No |

Table 4 describes the supported haptic modalities.

**Table 4**

| |
|---|
| Pressure = 0 |
| Acceleration |
| Velocity |
| Position |
| Temperature |
| Vibrotactile |
| Water |
| Wind |
| Force |
| Electrotactile |
| Vibrotactile Texture |
| Stiffness |
| Friction |
| Other |

Table 5 details the semantics of a haptic source. A source is simply characterized by a list of haptic medias.

**Table 5**

| **Name** | **Type** | **Default** | **Description** | **Required** |
|---|---|---|---|---|
| hapticMedias | Array<HapticMedia> | N/A | List of haptic medias associated with a source | Yes |

The semantic of haptic medias is detailed in Table 6. In the context of MPEG, the haptic data associated with a haptic media is stored in the MPEG_media.media array and can be referenced through glTF accessors. A media is also associated with a haptic modality and a state (enable, disabled). Additional properties such as Media Control properties may be added.

**Table 6**

| **Name** | **Type** | **Default** | **Description** | **Required** |
|---|---|---|---|---|
| hapticMedia | Accessor | N/A | Accessor to a media source in MPEG_media.media array containing haptic media files. | Yes |
| hapticModality | Enumeration | N/A | Haptic modality for which the propagation function is defined. | Yes |
| | | | Possible values are described in Table 4. | |
| mediaState | enumeration | "Disabled" | State of the haptic media. Possible values are | No |
| | | | Enabled | |
| | | | Disabled | |
| | | | ... | |

Table 7 details the properties of haptic listeners.

**Table 7**

| **Name** | **Type** | **Default** | **Description** | **Required** |
|---|---|---|---|---|
| hapticModality | Array<enumeration> | N/A | List of haptic modalities that can be captured by the listener. Possible values are described in Table 4. An empty list means that all modalities are captured by the listener. | Yes |

With the MPEG_spatial_haptic extension, the haptic data of an object may be directly attached to a node. The extension at the node level references elements defined at the glTF file level. The semantic of the MPEG_haptic extension at the node level is detailed in Table 8.

**Table 8**

| **Name** | **Type** | **Default** | **Description** | **Required** |
|---|---|---|---|---|
| hapticMediums | Array<MPEG_spatial _haptics.NodeMedium > | N/A | Reference to an item in the hapticObject array of the MPEG _haptic extension defined at glTF file level | Yes |
| hapticSources | Array<MPEG _spatial _haptics.NodeSource> | N/A | Reference to an item in the hapticSource array of the MPEG _haptic extension defined at glTF file level | Yes |
| hapticListeners | Array<MPEG _spatial _haptics.NodeListener > | N/A | Reference to an item in the hapticListener array of the MPEG _haptic extension defined at glTF file level | Yes |

The semantic of the NodeMedium elements is detailed in Table 9. It contains an index referencing an element of the hapticMediums array of the extension defined at the glTF file level. Additional properties of the medium at the node level should be investigated.

**Table 9**

| **Name** | **Type** | **Default** | **Description** | **Required** |
|---|---|---|---|---|
| index | Integer | N/A | Reference to an item in the hapticMediums array of the MPEG_spatial_haptic extension defined at glTF file level | Yes |

The semantic of the NodeSource elements is detailed in Table 10. It contains an index referencing an element of the hapticSources array of the extension defined at the glTF file level. A property indicating the precise location and shape of the source still has to be defined. Additional properties of the source at the node level should be investigated.

**Table 10**

| **Name** | **Type** | **Default** | **Description** | **Required** |
|---|---|---|---|---|
| index | Integer | N/A | Reference to an item in the hapticSources array of the MPEG _spatial _haptic extension defined at glTF file level | Yes |
| instanceLocation/shape | TBD | TBD | TBD | TBD |

The semantic of the NodeListener elements is detailed in Table 11. It contains an index referencing an element of the hapticSources array of the extension defined at the glTF file level. A property indicating the precise location and shape of the listener still must be defined. Additional properties of the listener at the node level should be investigated (such as an id property for instance).

**Table 11**

| **Name** | **Type** | **Default** | **Description** | **Required** |
|---|---|---|---|---|
| index | Integer | N/A | Reference to an item in the hapticListeners array of the MPEG _spatial _haptic extension defined at glTF file level | Yes |
| instanceLocation/shape | TBD | TBD | TBD | TBD |

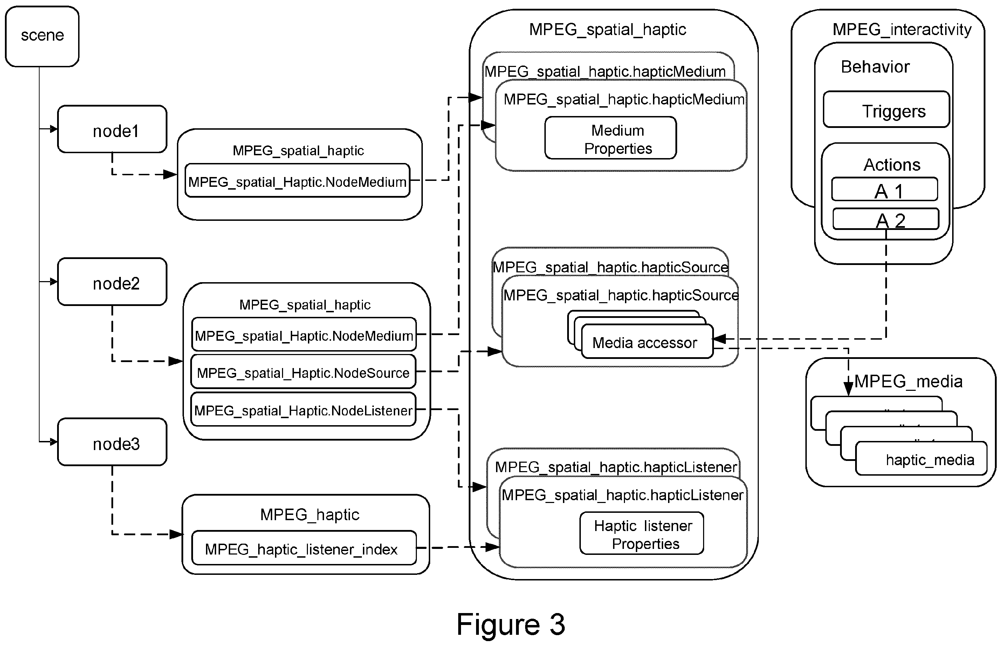

**Figure 3** illustrates an example of data structure for a MPEG_spatial _haptic extension within a system for haptic spatialization. All haptic mediums, haptic sources and haptic listeners are defined with the MPEG_spatial _haptic extension at the glTF file level. Object in the scene may then be associated with haptic mediums, haptic sources and/or haptic listeners. This solution allows to optimize data storage. If an object in the scene is duplicated, the haptic data itself is defined only once at the top level and is only referenced at the node level.

The system for haptic spatialization introduced above allows to define how a haptic signal coming from a haptic source is propagated to a haptic listener through the scene. The propagation function is defined for each object in the scene that propagates haptic data (i.e. haptic medium) and for each haptic modality. This solution implies that, for a given modality, there is only one way to propagate the haptic data through an object. While this is relevant from a physics perspective, it does not reflect most use cases for immersive experiences. Indeed, in many cases the haptic feedback propagated in the scene may have to be modulated differently, not only depending on the modality but also based on other information. For instance, some environments propose vibrotactile feedback related to user interface (UI) events or actions. Such feedback is not meant to be realistic and the propagation of this feedback throughout the scene does not have to obey the same rules and principles than the propagation of haptic signals associated with an event in the scene (e.g. an explosion happening at a distance). The propagation function of an object defined for a given modality (e.g. vibration) may not be relevant to propagate UI data. Additionally, it is quite common to deactivate part of the haptic feedback in a haptic experience. For instance, some user may prefer to remove haptic feedback associated with background event (e.g. the vibration associated with a car engine in a car simulation) to improve the perception of haptic feedback associated with punctual event (e.g. car driving over a bump in the road). In another example, some users may prefer to disable haptic feedback associated with UI notifications. This type of filtering may be based on user preferences, user capabilities or other properties related to the haptic experience itself (e.g. the capacity to perceive some haptic feedback may be related to the experience of a user in a game).

Such system for spatial haptics allows to specify the position of haptic listeners in the scene. Haptic data is then sampled in the scene from this position based on the haptic medium and haptic sources in relation with the haptic listener. However, such system for spatial haptics does not specify how the data should be rendered and does not indicate how to map the data from these haptic listeners to real world haptic devices or where on a user this data should be rendered.

Embodiments described hereafter have been designed with the foregoing in mind and propose a solution to perform the mapping of haptic listeners in a virtual environment to real actuators of a real-world haptic device. Embodiments introduce syntax for a hierarchical representation of haptic listeners allowing to establish a simple and straightforward mapping between haptic listeners and devices. Embodiments introduce the concept of virtual haptic devices. Virtual haptic devices are designed to organize haptic listeners in the scene in a logical manner using semantic information and a hierarchical data representation to model a virtual haptic setup. The purpose of these virtual haptic devices is not only to provide a list of related haptic listeners but also to provide both structural and semantic information related to the listener that may be useful to map the listeners to real devices and/or actuators.

Virtual haptic devices are defined as a hierarchical graph structure (i.e., a tree). Each virtual haptic device may be composed of a haptic listener or a set of sub-devices (i.e. device parts) comprising one or more haptic listeners. This graph may be assimilated to a tree where each virtual haptic device is a node that contains either a set of child virtual haptic devices (device or device part) or a single haptic listener (i.e., a leaf node of the tree). This allows to articulate the different listeners with one another in a meaningful manner. Additionally, semantic and structural information may be specified for each node. Embodiments propose to include properties to account for semantic data, layout data and ordering data. It is not mandatory to use all properties for each node. Typically, the semantic data is optional. The ordering data could be implicit and thus is optional since it may be inferred from the order of appearance of an element in the graph.

A first property relates to semantic data. Semantic data may be provided by a property describing generic information for the device (e.g. "chair", "vest") or sub-device (e.g. "chair seat", "chair back", "sleeve"). In at least one embodiment, this type of property is defined from a pre-determined list of devices, device parts, body parts. In another embodiment, this type of property is left open, in other words, it may be defined as descriptive text. Providing a pre-determined list makes it easier for implementation but having an open field makes the solution more flexible. This semantic information may also be based on body parts. The purpose of this property is two-fold. Given a haptic setup in the real world with potentially multiple real haptic devices, this semantic property can be useful firstly to map the virtual device to the most appropriate real device (E.g., haptic glove or haptic chair when both haptic devices are used) and secondly to map each actuator or group of actuators of the device to the corresponding haptic listener or group of haptic listeners.

A second property relates to layout data. Such property is crucial to the structuring of the virtual haptic device and allows to split a virtual device in multiple bodies. The layout data property indicates how each level of the hierarchical structure is organized by specifying the main direction for each node (E.g., left to right or top to bottom or front to back). If a node contains multiple children (i.e., a set of children), this property indicates a direction along which elements of the set are arranged. In at least one embodiment, the layout data property is expressed using generic pre-determined direction features, for example comprising left-to-right, right-to-left, top-to-bottom, bottom-to-top, front-to-back and back-to-front. These directions may be expressed as descriptive text or an enumeration where a numerical value corresponds to one direction. In at least one embodiment, the layout data property is expressed using a 3D vector space (E.g., X,Y,Z). In such embodiment, a positive or negative value in one of the axis corresponds to the direction with regard to this axis.

A third property relates to ordering data. The ordering property of a node indicates its position relative to the other child nodes of the parent node along the layout direction defined in the parent node's layout data. It may be defined as a numerical value. For instance, if a virtual device node with a "left-to-right" layout contains multiple child nodes, this ordering property indicates the relative position of each child node, going from left to right based on this ordering value (i.e., index) of the child nodes. The ordering value of a node should be different from the ordering values of the other child nodes with the same parent node.

This approach combining semantic data, layout data and ordering data to define a hierarchical haptic device is generic and provides much flexibility. In other embodiments, the structuring of this layout graph may be done using simpler solutions such as a binary tree with limited layout options (left/right, top/bottom, back/front) or an octree representation. Binary tree or octree solutions are particular cases of our generic proposal.

Different virtual haptic devices may share common listeners. This may be useful to create multiple virtual devices aimed at rendering different modalities captured by the same haptic listeners for instance.

The hierarchical nature of this solution makes it easily scalable. It can be used to model the simplest haptic setup with a single actuator such as a phone or the most advanced configuration such as flight simulators with moving platforms, force feedback devices, temperature feedback and vibrotactile feedback.

A simple use case is used hereunder to illustrate the proposed solution. In this use case, a user enjoys a simple car simulation haptic experience where the car engine can be turned on and off and the user can drive on a road where obstacles (i.e. bumps on the road) are located. The car engine may generate vibrations and collision with obstacles may trigger some haptic feedback. In order to capture these haptic effects, haptic listeners are placed on the haptic virtual device representing the haptic rendering device to be used.

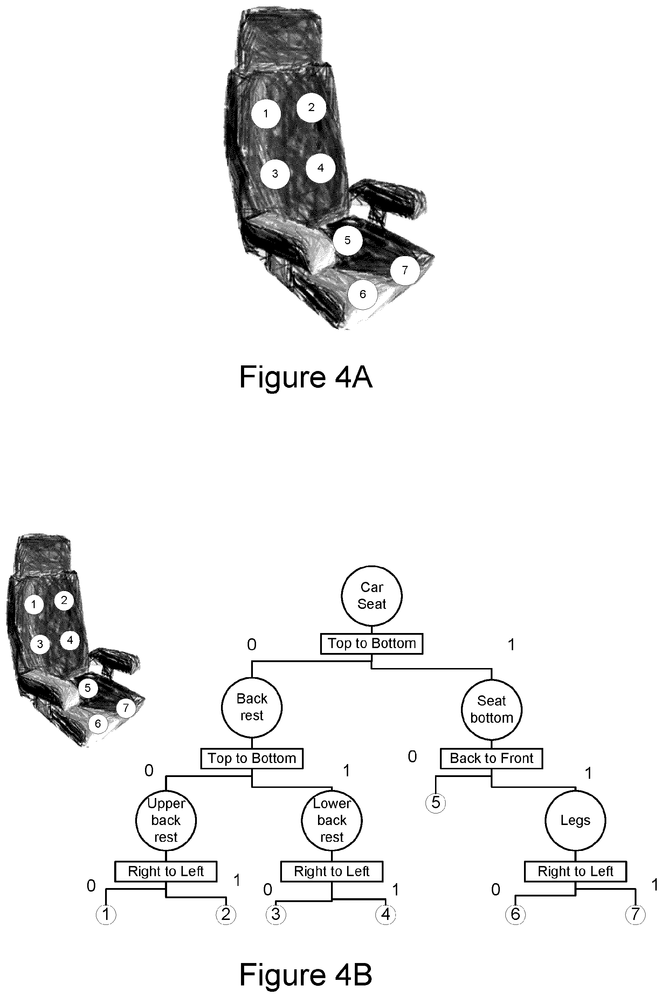

**Figure 4A** illustrates an example of an association of haptic listeners to a haptic virtual seat according to embodiments. In this example, seven haptic listeners are positioned on the haptic virtual device, here numbered from 1 to 7, respectively corresponding to the top right backrest, top left backrest, bottom right back rest, bottom left backrest, bottom back, front right leg and front left leg elements.

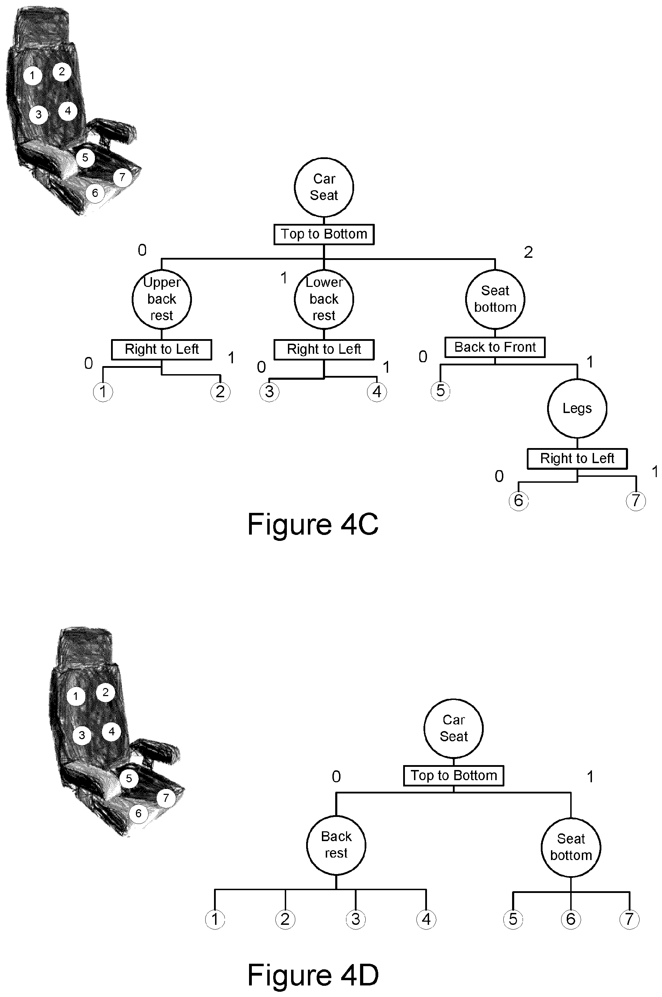

**Figures 4B****,** **4C, 4D** illustrate different examples of hierarchical structure defining a haptic virtual seat of figure 4A according to embodiments. In these examples, semantic information of a node is displayed within a circle, layout information of the node is displayed in a rectangular box below the circle and ordering index of a node is displayed as numerical value above the circle. The last nodes of the tree display the identifier of the haptic listener. Semantic information may be added to the last nodes to describe an individual element (E.g., bottom left backrest).

The solution proposed in this disclosure is flexible and allows to define a same configuration by different tree structures. Indeed, a same listener structure may be represented differently by simply changing the way the data is split. In some cases (for symmetric structures for instance), dividing a device first along the right/left direction and then in the front/back direction is equivalent to performing the subdivision the other way around (i.e., first along the front/back direction and then along the right/left direction).

In the example of figure 4B, the haptic seat is first split along a top-to-bottom direction in two sub-parts, with the seat backrest at the top and the seat bottom at the bottom. The chair backrest is then also split along the top-to-bottom direction with the upper backrest and the lower backrest, each finally split along the left-to-right direction. On the lower part, the seat bottom is split in the back-to-front direction with a single actuator in the back and two actuators in the front split along a left-to-right layout.

In the example of figure 4C, instead of splitting the car seat in two in the top-to-bottom direction and then splitting the seat back in two along the same direction, the tree splits the car seat directly in three. The upper backrest is the first element, then the lower backrest and finally the seat bottom. This results in another representation of the same elements.

In some embodiments, the layout property and the ordering property may be optional. Indeed, for some haptic setups or haptic experiences, it is not merely the relative position of the actuators that matters but their semantic. Additionally, a haptic experience designer may want to intentionally group multiple haptic listeners together without specifying a layout. This may force the mapping of this group of listeners to a single actuator and therefore allowing to automatically mix the haptic signal captured from different listeners (i.e. different locations). Figure 4D shows an example of simplified configuration with a single split along the top to bottom direction. This illustrates how a same configuration may be detailed with different level of details.

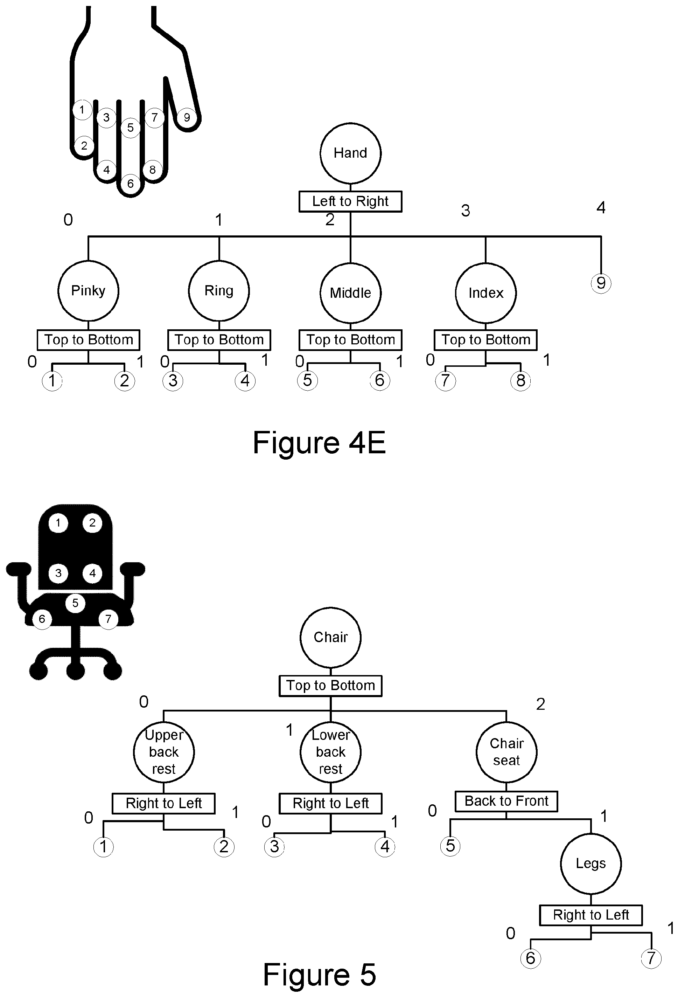

**Figure 4E** illustrates an example of hierarchical structure defining another example of haptic virtual device representing the hand of an avatar according to embodiments. In this example, a virtual haptic device is structured to capture the signal coming from 9 different haptic listeners placed on the hands of the avatar.

The purpose of the virtual haptic device is to determine a mapping between haptic listeners and real haptic actuators of a haptic rendering device. Such mapping could be performed manually for each listener and each actuator with a configuration file for instance, but such process is particularly tedious and has to be carried out every time a change is made to the virtual device configuration (e.g. adding, moving or removing haptic listeners in the scene) or the real device/setup itself. The proposed solution allows to automate this process and may allow to map a virtual haptic device to different real haptic devices (with different configurations).

**Figure 5** illustrates an example of hierarchical structure defining an example of haptic rendering device according to embodiments. Indeed, in order to automate the mapping, the hierarchical data defined for the virtual devices also has to be defined for real haptic rendering devices. The data structure itself is the same but provides information on the relation of haptic actuators within the device instead of the relation between haptic listeners within a virtual haptic device. The figure shows an example of the hierarchical structure of a haptic chair and describes how its actuators are organized. In the figure, as previously, semantic information of a node is displayed within the circle, layout information of the node is displayed in the box below the circle and the ordering index of a node is displayed above the circle. The last nodes of the tree display the id of the corresponding haptic actuator. For example, the actuator number 5 corresponds to the rear actuator of the chair seat.

Such information describing the hierarchical organization of actuators within a haptic rendering device may be provided by the device manufacturer or simply defined by the haptic experience designer using the device characteristics of a target rendering device. This data may be stored in a configuration file or provided through a URN for instance. It can then be used by a presentation engine or rendering engine to map the actuators of the device to the haptic listeners in the scene. This configuration file only needs to be defined once.

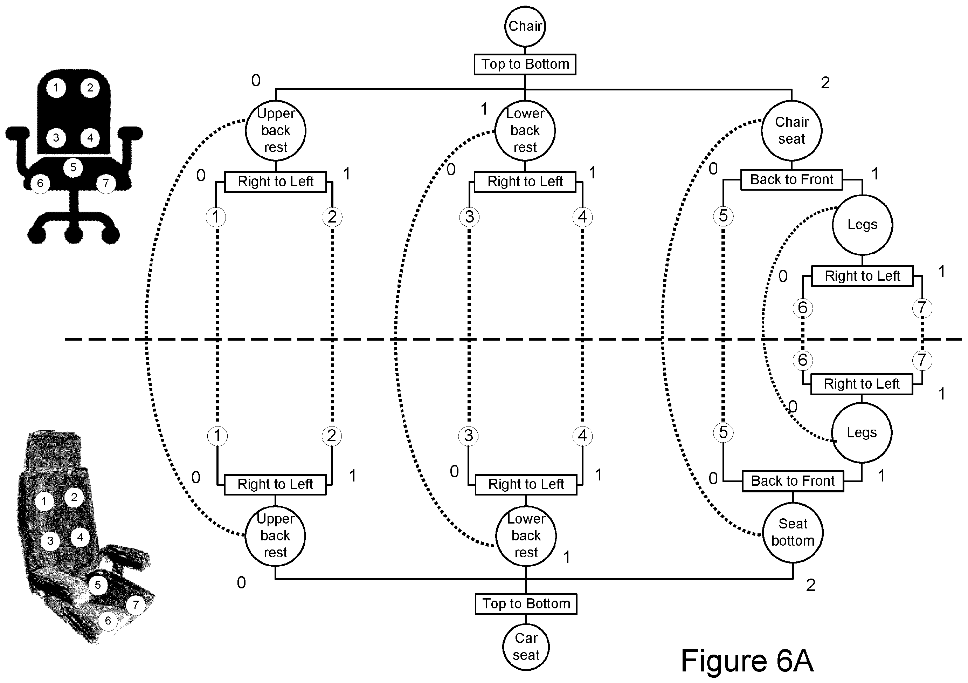

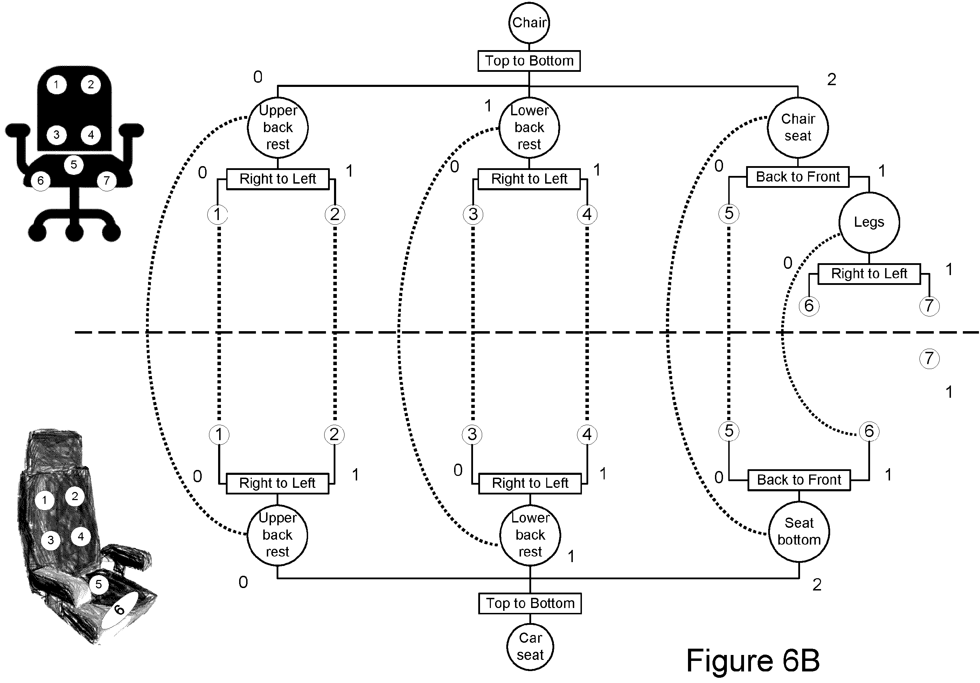

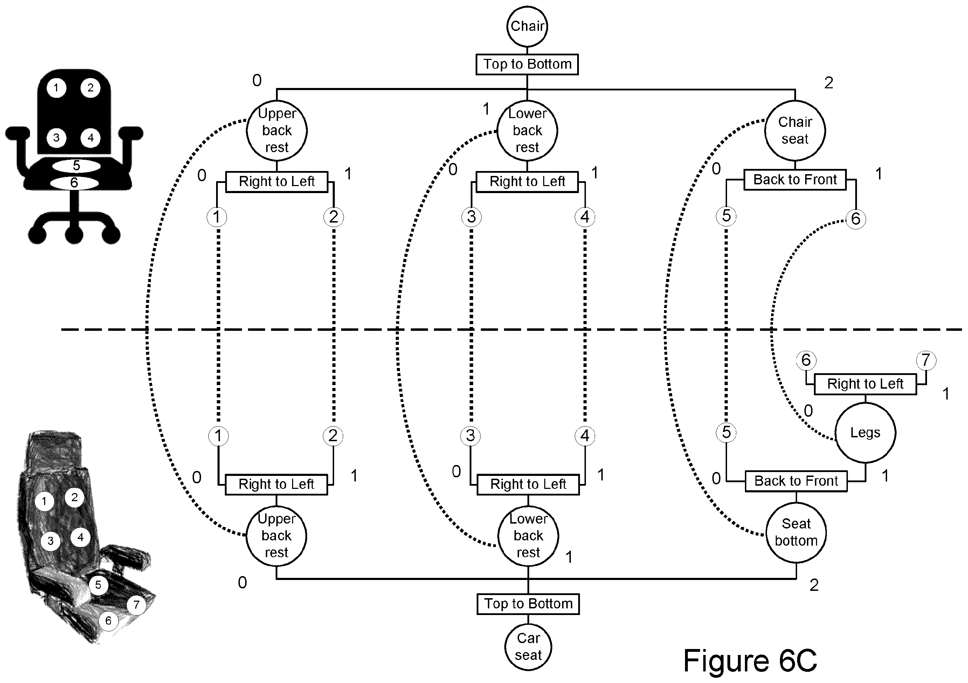

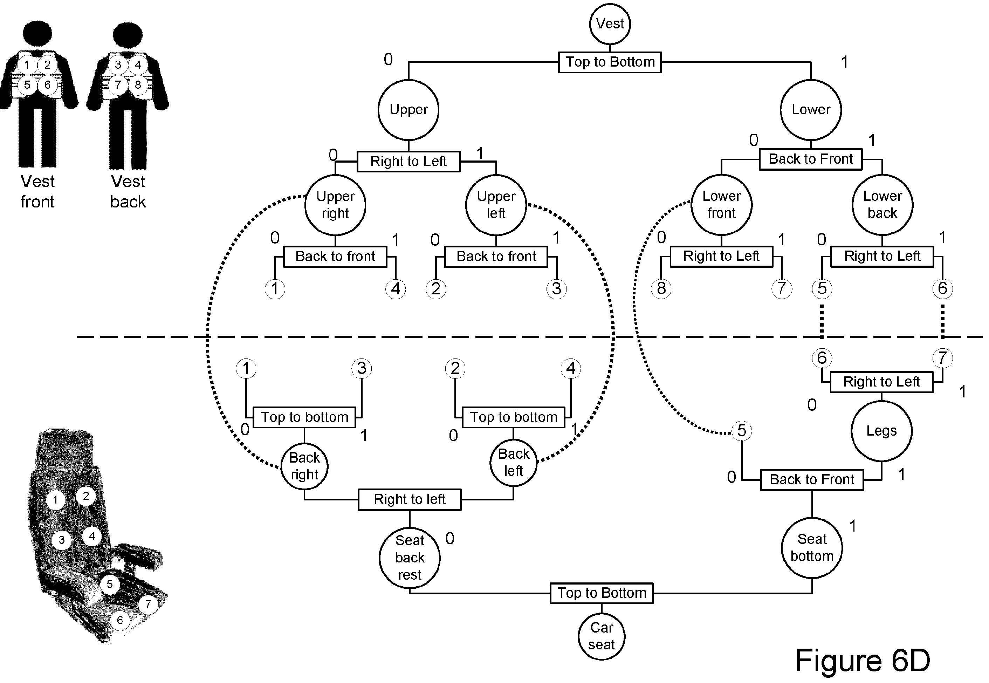

**Figures 6A****,** **6B****,** **6C****,** **6D** illustrate different examples of mapping between a hierarchical structure defining a haptic virtual seat and a hierarchical structure defining a haptic rendering device according to embodiments. The first example of figure 6A shows a straightforward mapping. Indeed, in many cases, a haptic designer will create a haptic experience to be rendered by a specific haptic device. In such case, the designer defines the virtual haptic device based on the characteristics and layout of the real haptic rendering device. If the haptic experience is rendered on the intended device, the mapping between the virtual device and the real device structure (and therefore between the haptic listeners and actuators) is then straightforward. This situation is illustrated in Figure 6A where the structures (and thus the layout graphs) of the real and virtual devices are identical. In this example, each node of the virtual device graph can be mapped (as illustrated by dotted lines) to a node of the real haptic rendering device. Here each actuator of the haptic chair is mapped to a single haptic listener in the scene.

In other cases, a haptic experience may be rendered on a device different from the one initially intended. Then, the virtual haptic device and the real haptic device may not perfectly match. However, if the layout graphs are similar, the mapping remains simple. Figure 6B illustrates an example of mapping where the number of actuators is greater than the number of listeners. The figure represents a haptic virtual seat different from the virtual seat of figure 4A. The difference is related to the seat bottom that does not separate the right and left legs but only comprises a bottom front element. In this case, the haptic listener number 6 can only be mapped to the Leg node, containing the actuators 6 and 7. The behavior of the presentation engine may then be defined by the haptic designer. A first solution is to render the haptic signal captured by the haptic listener 6 on both actuators 6 and 7 (seat legs) of the haptic rendering device. Another solution is to render only half of the signal on each actuator. Another solution is to map the listener 6 to only one of the two actuators based on their associated semantic information when such information exists.

Figure 6C illustrates an example of mapping where the number of actuators is smaller than the number of listeners. In this example, actuator number 6 may be mapped to the Leg node of the virtual device containing haptic listeners 6 and 7. Again, the appropriate behavior may be defined by the haptic designer. A first solution is to merge the signals captured by the two listeners and render them on the actuator number 6. Another option is to map the actuator number 6 to one of the two listeners based on their associated semantic information when such information exists.

In these first examples, the mapping remains simple due to the similarities between the real and virtual devices. Figure 6D illustrates an example of mapping where the haptic experience may have to be rendered on a completely different device, in other words, the haptic virtual device and the haptic rendering device have very different structures. The figure shows an example where the proposed solution allows the rendering of a haptic experience drafted for a haptic chair by mapping the virtual seat to a haptic vest. As a result of this mapping, the haptic feedback captured by the haptic listeners 1 and 3 on the right side of the upper car seat may be mapped to the actuators 1 and 4 of the upper right side of the haptic vest (front and back). Similarly, listeners 2 and 4 are mapped to actuators 2 and 3, listener 5 is mapped to actuators 7 and 8, listener 6 to actuator 5 and listener 7 to actuator 6. In this example every listener is mapped with at least one actuator and vice-versa. Therefore, the haptic experience will be rendered despite the different structures of the devices.

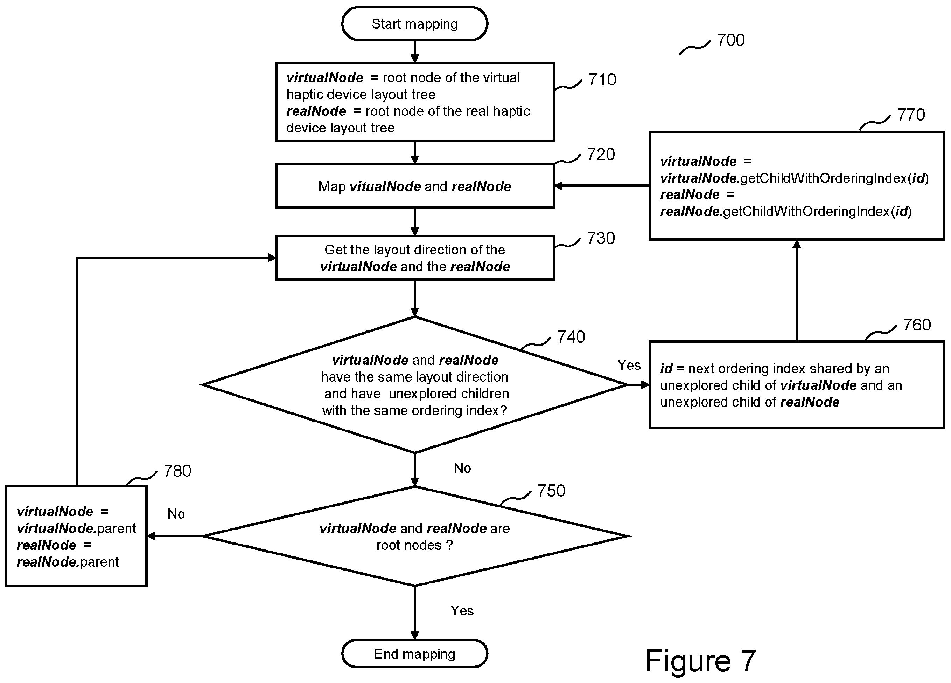

**Figure** 7 illustrates an example of method for mapping between a hierarchical structure defining a haptic virtual device and a hierarchical structure defining a haptic rendering device according to embodiments. This process 700 is for example implemented in a rendering device 100 of figure 1 and typically executed by the processor 101 of such device. The inputs to this process are a hierarchical structure defining a haptic virtual device and a hierarchical structure defining a haptic rendering device.

The process 700 is a recursive process that starts at the root of the virtual device and real device layout trees. The mapping process goes through the two graphs in parallel to map nodes from the virtual device with nodes from the real device. In step 710, the processor initializes the current virtual node virtualNode and the current real node realNode respectively as the root of the virtual device graph and the root of the real device graph. In step 720, the processor associates the current virtualNode of the virtual device with the current realNode of the real device. In step 730, the processor gets the layout directions of the virtualNode and the realNode and in step 740, checks if these layout directions are the same and if virtualNode and realNode both contain an unexplored child (i.e. virtualNode or realNode were never set to this child node) with a same ordering index. If this check is true, then in step 760, the processor gets the value of this id and in step 770, sets virtualNode and realNode to respectively the child of the current virtualNode with an ordering index of id and the child of the current realNode with an ordering index of id. The process then loops back to step 720. If the outcome of step 740 is false, the processor checks in step 750 if the current virtualNode and realNode are rootnodes. If this is true then the process ends and if this is false, in step 780, the processor sets virtualNode and realNode to their respective parent nodes and loops back to step 730.

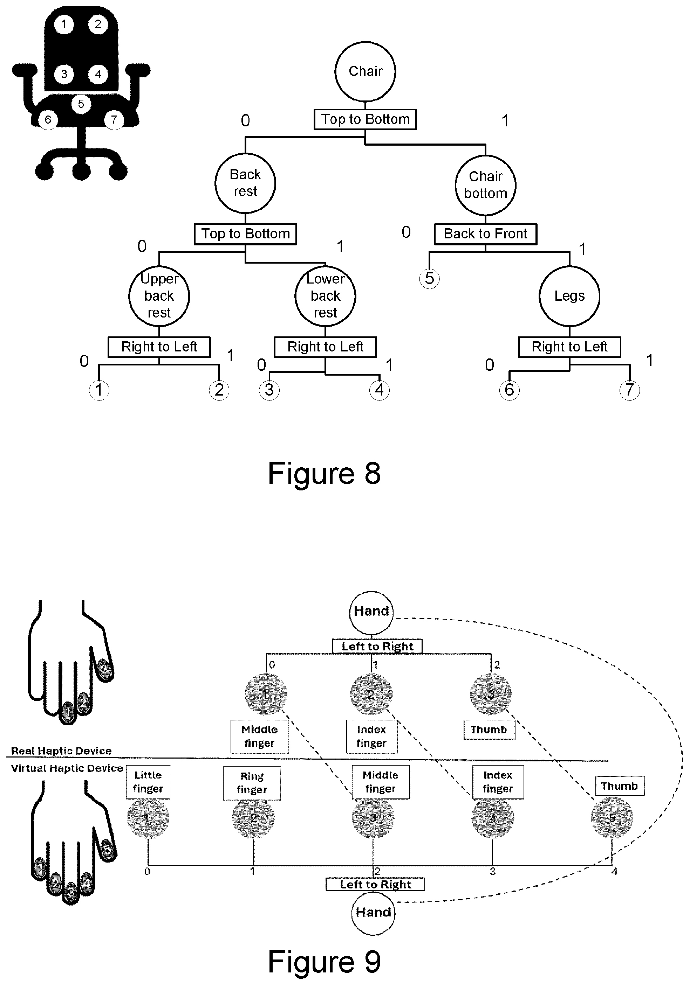

The proposed mapping method is very efficient when the virtual device tree and the real device tree are not identical but follow the same layout logic, in other words, when the order in which the device is decomposed (e.g. right-to-left first then front-to-back then top-to-bottom) is the same. The number of child nodes per level also plays an important role in the mapping process. The Figure 8 shows an example of haptic chair with a structure that is different from the structure of the virtual haptic seats of figure 4C or 4D. A mapping between such haptic chair and the virtual haptic seat of figure 4C may not provide satisfying result.

While the freedom in the organization of the actuator layout offers an interesting flexibility, it may also make the mapping between the virtual device and the real device more complex as it preferably requires the two configurations to be similar. To avoid this issue, several solutions may be used. First, conventions may be established for the layout ordering to define in which order the layout directions should be used (e.g. right-to-left first then front-to-back then top-to-bottom). Other constraints may also be added such as the maximum number of children per node for instance. These conventions may be specified as a hard constraint or simply as guidelines. Device manufacturers may provide guidelines on which convention to follow to map their devices. A second solution is that device manufacturers provide more than one layout configuration tree for a single device. The different configurations may use different ordering conventions and provide different levels of details for instance. The mapping may then be performed by using the configuration best matching the virtual haptic device tree. A third solution is that haptic designers define multiple layout configuration trees for their virtual haptic device. The mapping may then be performed by using the configuration best matching the real haptic device layout tree. In some cases, if the layout information is not sufficient or even absent, the mapping process may be guided by the semantic information of each node on the tree.

In some cases, it is not merely the relative position of the actuators that matters but their semantic. Figure 9 illustrates an example of mapping performed based on semantic information according to embodiments. In this example, a virtual device comprises one listener per finger while the real device used to render the experience contains only one actuator on only 3 fingers. Here the semantic information of the leaf nodes is displayed in the boxes below the actuator/listener index. To map the virtual device with the real device, the semantic information associated with each leaf node is used instead of the layout and ordering data. This results in a correct mapping of the middle finger, index and thumb.

Most of the above solutions require manual work to provide multiple layout configuration of the same device.

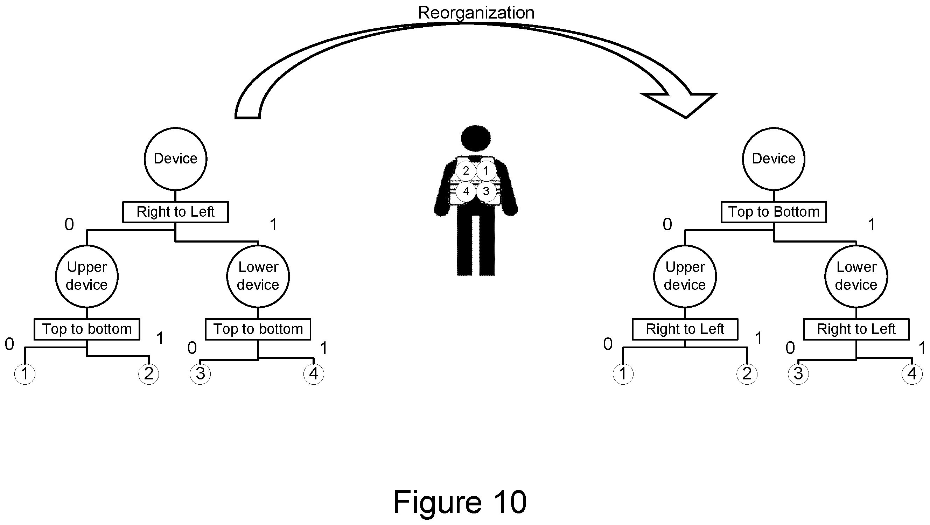

Embodiments propose a method to automatically generate alternate versions of the layout tree through automatic reorganization of the tree. Such process may for instance leverage the symmetry of some part of the graph to switch the layout directions of a node with the layout directions of its children. Figure 10 illustrates the result of a reorganization for a haptic vest, initially organized in two layers, right to left at the upper layer and top to bottom at the second layer into a two layer structure, top to bottom at the first layer and right to left at the second layer. The reorganization can be achieved in this case since the layout direction of all the children is the same.

Another way to restructure part of the tree is to move the child of a node to its parent level. This can be achieved if the parent and child have the same layout directions. Such operation can be used to reorganize the layout tree of Figure 4B into the layout tree of Figure 4C.

Based on such reorganization method, an automatic process may be setup to automatically generate all possible layout trees of a haptic device (real or virtual). The reorganization process may be applied either to the layout tree of the virtual device or to the layout tree of the real device until a proper mapping can be achieved.

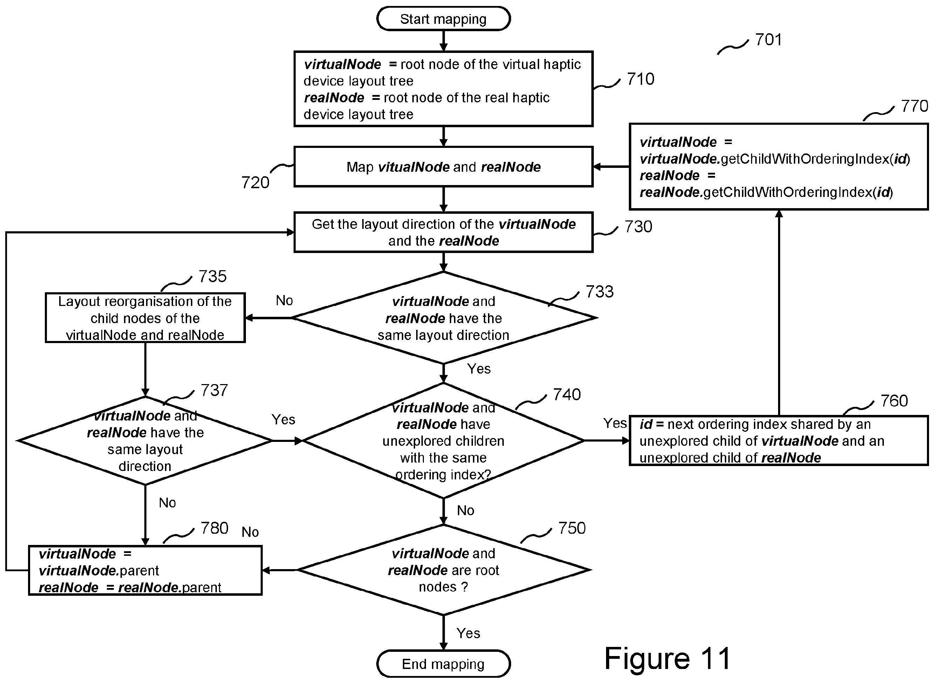

**Figure 11** illustrates an example of method for mapping between a hierarchical structure defining a haptic virtual device and a hierarchical structure defining a haptic rendering device comprising a reorganization process according to embodiments. This process 701 is for example implemented in a rendering device 100 of figure 1 and typically executed by the processor 101 of such device. The inputs to this process are a hierarchical structure defining a haptic virtual device and a hierarchical structure defining a haptic rendering device. The process 701 is very similar to the process 700 of figure 7, except the additional steps 733, 735 and 737.

In step 733, the processor checks if the layout direction of the current virtual node is the same as the layout direction of the current real node. If this is true, the process then jumps to step 740 to check if the current real and virtual node both have unexplored children with the same ordering index. If this is false, the process moves on to step 735.

In step 735, the processor restructures the child nodes of the current virtual and real node, by switching the layout directions of different levels of the sub-tree if possible as illustrated in Figure 9. Step 735 stops when the processor either finds a solution where the layout direction of the current virtual node and real nodes is the same or when there are no other way to restructure this part of the graph.

In step 737, the processor checks if the layout direction of the current virtual node and real nodes is the same. If true, the process goes back to step 740. If false, the process goes back to step 780.

As a result of this process, the reorganization is performed only on a part of the tree, either for the real or the virtual device, if two mapped nodes (real and virtual) have a different layout direction. The reorganization does not impact the nodes already mapped as it only affects the child nodes of unvisited nodes. If the process is successful, the mapping continues with the children, otherwise the mapping moves along and goes back to the parent nodes.

In the context of the MPEG-I standard, the proposed solution could be integrated to the proposed MPEG_spatial _haptic extension. Currently, the MPEG_spatial_haptic extension is defined both at the file level and at the node level. To implement the solution, it is proposed to define the extension at the scene level. The extension at the scene level may list all the virtual haptic devices and Haptic User Setup in the scene.

First, the proposed solution requires to update the semantic of the NodeListener elements of the hapticListeners elements in the MPEG_spatial_haptics extension at the node level. In order to be able to reference a node listener a new NodeListenerId property is added as shown in Table 12.

**Table 12**

| **Name** | **Type** | **Default** | **Description** | **Required** |
|---|---|---|---|---|
| Index | Integer | N/A | Reference to an item in the hapticListeners array of the MPEG _spatial _haptic extension defined at glTF file level | Yes |
| NodeListenerId | Integer | N/A | Unique Id of this node level haptic listener. | Yes |
| instanceLocation/shape | TBD | TBD | TBD | TBD |

At the scene level, the MPEG_spatial _haptic extension contains an array of virtual haptic devices. Table 13 details the associated semantic.

**Table 13**

| **Name** | **Type** | **Default** | **Description** | **Req.** |
|---|---|---|---|---|
| hapticDevices | Array<MPEG _spatial _haptics. Device> | N/A | Provides a list of virtual haptic devices at the glTF scene level to organize the haptic listeners provided at the node level. | Yes |

Each haptic device is organized with the proposed hierarchical representation. The semantic of a virtual haptic device is detailed in Table 14. It defines a root node and a device description. In another embodiment, this could be expressed as a list of rootNodes, each providing a different tree structure for the same virtual haptic Device.

**Table 14**

| **Name** | **Type** | **Default** | **Description** | **Required** |
|---|---|---|---|---|
| rootNode | DeviceNode | N/A | Root node of virtual device tree. | Yes |
| deviceDescription | String | N/A | Description of the virtual Device | Yes |

Each node of the virtual device tree is then composed of a list of properties. It may specify a semantic property for the node, an ordering index relative to the layout of the parent node. A layout direction for the children and either a haptic listener index or a list of child nodes. The semantic is detailed in Table 15.

| **Name** | **Type** | **Default** | **Description** | **Required** |
|---|---|---|---|---|
| layoutDirection | Enumeration <String> | N/A | Direction along which the children of this node are organized. Possible values may be left-to-right, right-to-left, top-to-bottom, bottom-to-top, front-to-back and back-to-front. | No |
| | | | This property shall not be used if the hapticListenerIndex property is used. | |
| hapticListenerIndex | Integer | N/A | Index of the node level haptic listener in the scene | No |
| children | Array <DeviceNode> | N/A | This property shall not be used or the array shall be empty if the hapticListenerIndex property is used. | No |
| orderingIndex | Integer | N/A | Ordering value of this node along the parent layoutDirection. | No |
| Semantic | String | N/A | Semantic information associated to the node of the haptic device. | No |
| Table 15 | | | | |

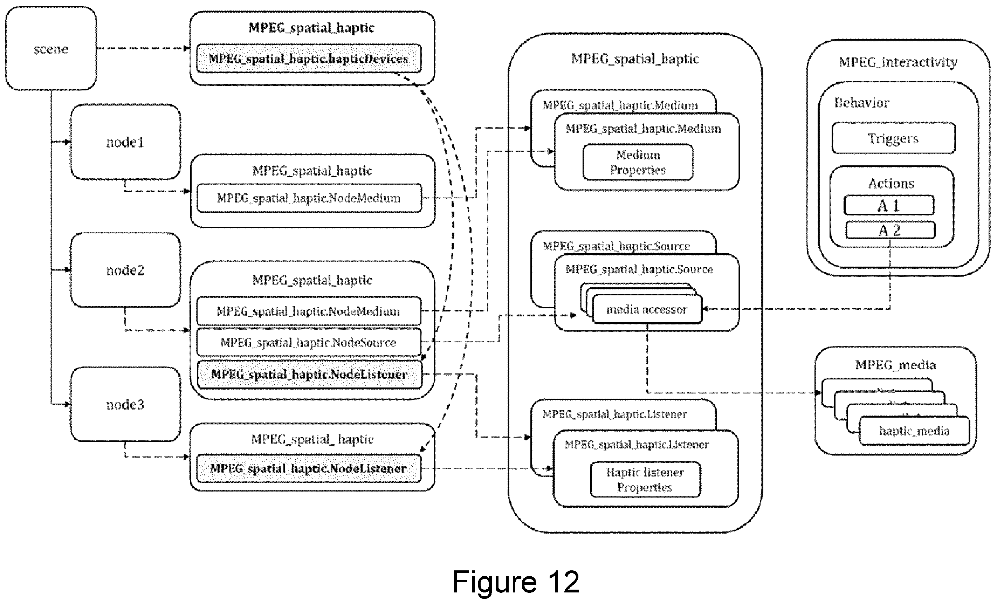

**Figure 12** illustrates an example of data structure for a MPEG_spatial_haptic extension within a system for haptic spatialization according to embodiments. The figure shows the integration of the solutions proposed herein within the current MPEG Scene Description framework. In such case, the spatial haptic extension is also defined at the scene level with a list of haptic devices referencing the haptic listeners in the scene.

In order to allow the mapping of the virtual devices to the real devices, the same type of information must be specified for real devices. The proposed implementation is based on a JSON configuration file following the same data structure. The first level of the JSON file defines a list of different layout configurations that may be used to define the actuators layout. The semantic is detailed in Table 16.

**Table 16**

| **Name** | **Type** | **Default** | **Description** | **Required** |
|---|---|---|---|---|
| configurations | List<HapticDevice Node> | N/A | List of different layout configurations that may be used for the same device. Each element is the root node of the reference device structure. | Yes |
| deviceDescription | String | N/A | Description of the haptic device. | Yes |

Each Node of the structure may be defined using the semantic proposed in Table 17.

**Table 17**

| **Name** | **Type** | **Default** | **Description** | **Required** |
|---|---|---|---|---|
| layoutDirection | String | N/A | Direction along which the children of this node are organized. Possible values may be left-to-right, right-to-left, top-to-bottom, bottom-to-top, front-to-back and back-to-front. | No |
| | | | This property shall not be used if the hapticListenerIndex property is used. | |
| actuatorIndex | Integer | N/A | Index of the associated actuator | No |
| children | Array<DeviceNode> | N/A | This property shall not be used or the array shall be empty if the actuatorIndex property is used. | No |
| orderingIndex | Integer | | Ordering value of this node along the parent layoutDirection. | No |

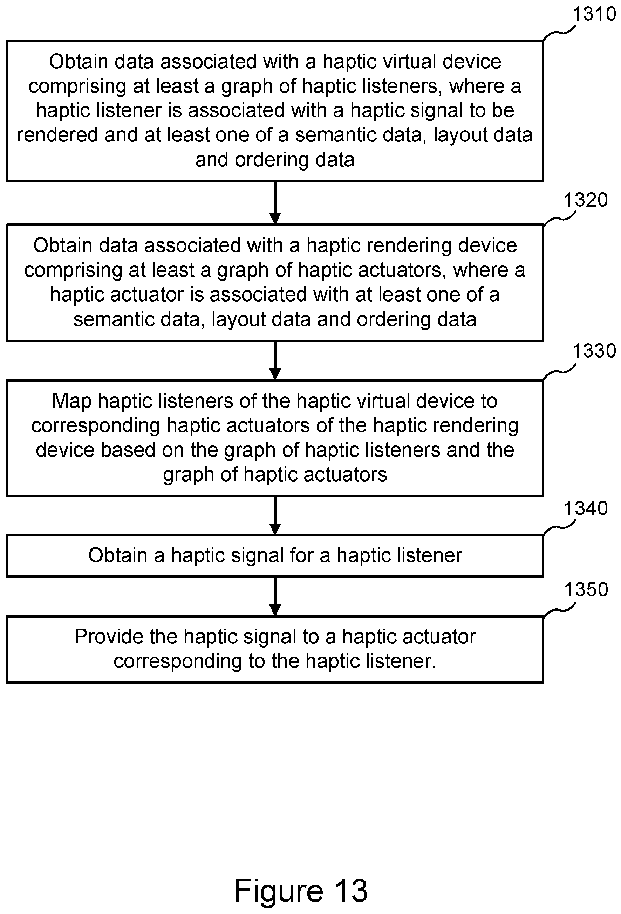

**Figure 13** illustrates an example of method for handling haptic listeners according to embodiments. This process 701 is for example implemented in a rendering device 100 of figure 1 and typically executed by the processor 101 of such device.

In step 1310, the processor obtains data associated with a haptic virtual device comprising at least a graph of haptic listeners, where a haptic listener is associated with a haptic signal to be rendered and at least one of a semantic data, layout data and ordering data.

In step 1320, the processor obtains data associated with a haptic rendering device comprising at least a graph of haptic actuators, where a haptic actuator is associated with at least one of a semantic data, layout data and ordering data.

In step 1330, the processor maps haptic listeners of the haptic virtual device to corresponding haptic actuators of the haptic rendering device based on the graph of haptic listeners and the graph of haptic actuators. In order words, it associates a listener with an actuator. The mapping is for example implemented using the process 700 of figure 7 or the process 701 of figure 11.

In step 1340, the processor obtains a haptic signal associated with a haptic listener.

In step 1350, the processor provides the haptic signal to a haptic actuator corresponding to the haptic listener.

Although different embodiments have been described separately, any combination of the embodiments together can be done while respecting the principles of the disclosure.

Although embodiments are related to haptic effects, the person skilled in the art will appreciate that the same principles could apply to other effects such as the sensorial effects for example and thus would comprise smell, taste, temperature, emotions, intensity highlights, etc. Appropriate syntax would thus determine the appropriate parameters related to these effects.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Additionally, this application or its claims may refer to "obtaining" various pieces of information. Obtaining is, as with "accessing", intended to be a broad term. Obtaining the information may include one or more of, for example, receiving the information, accessing the information, or retrieving the information (for example, from memory or optical media storage). Further, "obtaining" is typically involved, in one way or another, during operations such as, for example, storing the information, processing the information, transmitting the information, moving the information, copying the information, erasing the information, calculating the information, determining the information, predicting the information, or estimating the information. This application or its claims may refer to "device" or "apparatus" interchangeably.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

## Claims

1. A method comprising:
obtaining data associated with a haptic virtual device comprising at least a graph of haptic listeners, where a haptic listener is associated with a haptic signal to be rendered and at least one of a semantic data, layout data and ordering data;
obtaining data associated with a haptic rendering device comprising at least a graph of haptic actuators, where a haptic actuator is associated with at least one of a semantic data, layout data and ordering data;
mapping haptic listeners of the haptic virtual device to corresponding haptic actuators of the haptic rendering device based on the graph of haptic listeners and the graph of haptic actuators;
obtaining a haptic signal for a haptic listener; and
providing the haptic signal to a haptic actuator corresponding to the haptic listener.

2. The method of claim 1, further comprising reorganizing the graph of haptic listeners or the graph of haptic actuators.

3. The method of any of claim 1 or 2, wherein the haptic listener is associated with layout data defining a direction along which a set of haptic listeners is arranged and the haptic actuator is associated with layout data defining a direction along which a set of haptic actuators is arranged.

4. The method of claim 3, wherein the layout data is selected among a set comprising left-to-right, right-to-left, top-to-bottom, bottom-to-top, front-to-back and back-to-front.

5. The method of any of claim 3 or 4, wherein the haptic listener is associated with ordering data being a numeric value defining an order in the set of haptic listeners arranged according to the layout data and wherein the haptic actuator is associated with ordering data being a numeric value defining an order in the set of haptic actuators arranged according to the layout data.

6. An apparatus comprising a processor configured to:
obtain data associated with a haptic virtual device comprising at least a graph of haptic listeners, where a haptic listener is associated with a haptic signal to be rendered and at least one of a semantic data, layout data and ordering data;
obtain data associated with a haptic rendering device comprising at least a graph of haptic actuators, where a haptic actuator is associated with at least one of a semantic data, layout data and ordering data;
map haptic listeners of the haptic virtual device to corresponding haptic actuators of the haptic rendering device based on the graph of haptic listeners and the graph of haptic actuators;
obtain a haptic signal for a haptic listener; and
provide the haptic signal to a haptic actuator corresponding to the haptic listener.

7. The apparatus of claim 6, further comprising reorganizing the graph of haptic listeners or the graph of haptic actuators.

8. The apparatus of any of claim 6 or 7, wherein the haptic listener is associated with layout data defining a direction along which a set of haptic listeners is arranged and the haptic actuator is associated with layout data defining a direction along which a set of haptic actuators is arranged.

9. The apparatus of claim 8, wherein the layout data is selected among a set comprising left-to-right, right-to-left, top-to-bottom, bottom-to-top, front-to-back and back-to-front.

10. The apparatus of any of claim 8 or 9, wherein the haptic listener is associated with ordering data being a numeric value defining an order in the set of haptic listeners arranged according to the layout data and wherein the haptic actuator is associated with ordering data being a numeric value defining an order in the set of haptic actuators arranged according to the layout data.

11. A computer program comprising program code instructions for implementing the method according to any of claims 1 to 5 when executed by a processor.

12. A non-transitory computer readable medium comprising program code instructions for implementing the method according to any of claims 1 to 5 when executed by a processor.
